# EUROPEAN PATENT APPLICATION

(11) **EP 4 707 016 A1**
(43) Date of publication of application: **11.03.2026**
(21) Application number: 25805600.1
(22) Date of filing: 14.03.2025
(51) Int. Cl.: B60K 6/54, B60K 6/36, B60K 6/38

(54) **GEARBOX, HYBRID POWER SYSTEM AND AUTOMOBILE**

(30) Priority: 24.05.2024 CN 202410654164
(71) Applicant: Chery Automobile Co., Ltd., Wuhu, Anhui 241006 (CN); Wuhu Acteco Powertrain Co., Ltd, Wuhu, Anhui 241009 (CN)
(72) Inventor: WU, Qihao, Wuhu, Anhui 241006 (CN); SHU, Meizhen, Wuhu, Anhui 241006 (CN); ZHOU, Zhiguang, Wuhu, Anhui 241006 (CN); YE, Yuanlong, Wuhu, Anhui 241006 (CN); YU, Song, Wuhu, Anhui 241006 (CN)
(74) Representative: Reddie & Grose LLP
(86) International application number: PCT/CN2025/082714
(87) International publication number: WO 2025/241672

(57) **Abstract**

The present disclosure provides a hybrid power transmission system and a vehicle, which belong to the field of vehicle component technologies. The hybrid power transmission system includes: an engine (1), a first motor (2), a second motor (3), a first clutch (4), a transmission mechanism (5) and an output shaft (6). The output shaft of the engine (1) is coaxially disposed with the output shaft of the first motor (2), and is drivingly connected to the output shaft of the first motor (2) via the first clutch (4). The output shaft of the first motor (2) and an output shaft of the second motor (3) are connected to the output shaft (6) via the transmission mechanism (5), and the transmission mechanism (5) is configured to enable the output shaft (6) to be drivingly connected to the engine (1) and/or the first motor (2) and/or the second motor (3). The output shaft (6) is configured to be drivingly connected to wheels (100). In this way, the engine (1) is drivingly connected to the first motor (2) without a need for a pair of gears therebetween, and the size of the hybrid power transmission system is reduced.

## Description

The present disclosure claims priority to Chinese Patent Application No. 202410654164X, filed on May 24, 2024 and entitled "HYBRID POWER TRANSMISSION SYSTEM AND VEHICLE", the entire content of which is incorporated herein by reference.

### TECHNICAL FIELD

The present disclosure relates to the field of vehicle component technologies, and in particular relates to a hybrid power transmission system and a vehicle.

### BACKGROUND

The hybrid power transmission system is an important component in a hybrid power vehicle, and adopts an engine and a motor as power sources, such that the vehicle is driven by oil and electricity, and has both power and economy.

However, the structure of the hybrid power transmission system in the related art is relatively complex and occupies a larger size, which causes difficulties in arrangement of the hybrid power transmission system in the vehicle.

### SUMMARY

The present disclosure provides a hybrid power transmission system, which can reduce the size of the hybrid power transmission system, and the technical solutions of the hybrid power transmission system are as follows.

In a first aspect, the present disclosure provides a hybrid power transmission system. The hybrid power transmission system includes an engine, a first motor, a second motor, a first clutch, a transmission mechanism and an output shaft;
an output shaft of the engine is coaxially disposed with an output shaft of the first motor, and is drivingly connected to the output shaft of the first motor via the first clutch;
the output shaft of the first motor and an output shaft of the second motor are connected to the output shaft via the transmission mechanism, wherein the transmission mechanism is configured to enable the output shaft to be drivingly connected to the engine and/or the first motor and/or the second motor; and
the output shaft is configured to be drivingly connected to wheels.

In a possible embodiment, the first motor is sleeved over the first clutch.

In a possible embodiment, the transmission mechanism includes a second clutch, a transmission shaft, a first gear train, a second gear train, a gear shifting mechanism and a third gear train, and the second clutch is a double-clutch and includes a first sub-clutch mechanism and a second sub-clutch mechanism;
the output shaft of the first motor is drivingly connected to the transmission shaft via the first sub-clutch mechanism, and the transmission shaft is drivingly connected to input ends of the first gear train and the second gear train;
the second motor is drivingly connected to the input ends of the first gear train and the second gear train;
output ends of the first gear train and the second gear train are connected to the output shaft via the gear shifting mechanism, and the gear shifting mechanism is capable of shifting either the first gear train or the first gear train to be drivingly connected to the output shaft; and
an input end of the third gear train is drivingly connected to the first motor via the second sub-clutch mechanism, and the input end of the third gear train is connected to the transmission shaft via the first sub-clutch mechanism and the second sub-clutch mechanism.

In a possible embodiment, a transmission ratio of the first gear train is greater than a transmission ratio of the third gear train, and the transmission ratio of the third gear train is greater than a transmission ratio of the second gear train.

In a possible embodiment, the hybrid power transmission system has a pure electric driving mode and an engine driving mode;
wherein in the pure electric driving mode, the first clutch is not engaged, the second motor drives the output shaft to rotate, or the first motor and the second motor jointly drive the output shaft to rotate; and
in the engine driving mode, the first clutch is engaged, and the first sub-clutch mechanism and/or the second sub-clutch mechanism are/is engaged.

In a possible embodiment, the hybrid power transmission system has a series driving mode and a parallel driving mode;
wherein in the series driving mode, the first clutch is engaged, the engine drives the first motor to generate electricity, the first motor is configured to supply electricity to the second motor, and the second motor drives the output shaft; and
in the parallel driving mode, the first clutch is engaged, the first sub-clutch mechanism and/or the second sub-clutch mechanism are/is engaged, and the engine, the first motor and the second motor jointly drive the output shaft.

In a possible embodiment, the first gear train includes a first gear and a second gear engaged with the first gear, and the second gear train includes a third gear and a fourth gear engaged with the third gear;
wherein the first gear and the third gear are connected to the transmission shaft, the first gear is further drivingly connected to the second motor, and the second gear and the fourth gear are sleeved over the output shaft; and
the third gear train includes a fifth gear and a sixth gear, the fifth gear is sleeved over the transmission shaft and is connected to the second sub-clutch mechanism, and the sixth gear is connected to the output shaft.

In a possible embodiment, the second clutch further includes a first housing, wherein the first housing is connected to the output shaft of the first motor;
the first sub-clutch mechanism includes a first clutch plate and a first pressure plate, the first clutch plate is circumferentially fixed on the inner side of the first housing, the first pressure plate is connected to the transmission shaft, and in response to the first pressure plate being engaged with the first clutch plate, the first motor is connected to the transmission shaft; and
the second sub-clutch mechanism includes a second clutch plate and a second pressure plate, the second clutch plate is circumferentially fixed on an inner side of the first housing, the second pressure plate is connected to the third gear train and is sleeved over the transmission shaft, and in response to the second clutch plate being engaged with the second pressure plate, the first motor is drivingly connected to the third gear train.

In a possible embodiment, the second motor includes a motor body, an output gear and an idler gear;
wherein the output gear is connected to the motor body, and the idler gear is engaged with the output gear and an input end of the first gear train.

In a second aspect, the present disclosure further provides a vehicle. The vehicle includes any hybrid power transmission system in the first aspect.

The technical solution according to the present disclosure at least includes the following beneficial effects.

The present disclosure provides a hybrid power transmission system. The engine is coaxially disposed with the first motor, and is drivingly connected to the output shaft of the first motor via the first clutch. In the case that the engine drives the first motor to generate electricity or the engine drives the output shaft to rotate, the first clutch is engaged. In this way, the engine is drivingly connected to the first motor without a need fora pair of gears therebetween, and a gear shaft is canceled. In this way, the size of the hybrid power transmission system in the height direction is reduced, such that the size occupied by the hybrid power transmission system is smaller, which is convenient for assembling the hybrid power transmission system in the vehicle.

Additional aspects and advantages of the present disclosure are to be described in part in the following descriptions, which are obvious in part from the following descriptions, or are to be learned by practice of the present disclosure.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some examples of the present disclosure, and those of ordinary skill in the art may still derive other drawings from these accompanying drawings without creative efforts.
FIG. 1 is a schematic structural diagram of a hybrid power transmission system according to some embodiments of the present disclosure;
FIG. 2 is a schematic structural diagram of a hybrid power transmission system according to some embodiments of the present disclosure;
FIG. 3 is a partial schematic structural diagram of a hybrid power transmission system according to some embodiments of the present disclosure;
FIG. 4 is a schematic diagram of a power transmission path of a hybrid power transmission system according to some embodiments of the present disclosure;
FIG. 5 is a schematic diagram of a power transmission path of a hybrid power transmission system according to some embodiments of the present disclosure;
FIG. 6 is a schematic diagram of a power transmission path of a hybrid power transmission system according to some embodiments of the present disclosure;
FIG. 7 is a schematic structural diagram of a hybrid power transmission system according to some embodiments of the present disclosure;
FIG. 8 is a schematic diagram of a power transmission path in a single-motor mode of a hybrid power transmission system according to some embodiments of the present disclosure;
FIG. 9 is a schematic diagram of a power transmission path in a single-motor mode of a hybrid power transmission system according to some embodiments of the present disclosure;
FIG. 10 is a schematic diagram of a power transmission path in a single-motor mode of a hybrid power transmission system according to some embodiments of the present disclosure;
FIG. 11 is a schematic diagram of a power transmission path in a double-motor mode of a hybrid power transmission system according to some embodiments of the present disclosure;
FIG. 12 is a schematic diagram of a power transmission path in a double-motor mode of a hybrid power transmission system according to some embodiments of the present disclosure;
FIG. 13 is a schematic diagram of a power transmission path in a double-motor mode of a hybrid power transmission system according to some embodiments of the present disclosure;
FIG. 14 is a schematic diagram of a power transmission path in a double-motor mode of a hybrid power transmission system according to some embodiments of the present disclosure;
FIG. 15 is a schematic diagram of a power transmission path in a double-motor mode of a hybrid power transmission system according to some embodiments of the present disclosure;
FIG. 16 is a schematic diagram of a power transmission path in an engine driving mode of a hybrid power transmission system according to some embodiments of the present disclosure;
FIG. 17 is a schematic diagram of a power transmission path in an engine driving mode of a hybrid power transmission system according to some embodiments of the present disclosure;
FIG. 18 is a schematic diagram of a power transmission path in an engine driving mode of a hybrid power transmission system according to some embodiments of the present disclosure;
FIG. 19 is a schematic diagram of a power transmission path in a parallel driving mode of a hybrid power transmission system according to some embodiments of the present disclosure;
FIG. 20 is a schematic diagram of a power transmission path in a parallel driving mode of a hybrid power transmission system according to some embodiments of the present disclosure;
FIG. 21 is a schematic diagram of a power transmission path in a parallel driving mode of a hybrid power transmission system according to some embodiments of the present disclosure;
FIG. 22 is a schematic diagram of a power transmission path in a parallel driving mode of a hybrid power transmission system according to some embodiments of the present disclosure; and
FIG. 23 is a schematic diagram of a power transmission path in a parallel driving mode of a hybrid power transmission system according to some embodiments of the present disclosure.

The symbols in the figures are illustrated as follows:
1-engine;
2-first motor;
3-second motor, 301-motor body, 302-output gear, and 303-idler gear;
4-first clutch, 41-second housing, 42-third clutch plate, 43-third pressure plate;
5-transmission mechanism, 51-second clutch, 511-first sub-clutch mechanism, 5111-first clutch plate, 5112-first pressure plate, 512-second sub-clutch mechanism, 5121-second clutch plate, 5122-second pressure plate, 513-first housing, 52-transmission shaft, 53-first gear train, 531-first gear, 532-second gear, 54-second gear train, 541-third gear, 542-fourth gear, 55-gear shifting mechanism, 56-third gear train, 561-fifth gear, and 562-sixth gear;
6-output shaft;
7-differential; and
100-wheel.

### DETAILED DESCRIPTION

Unless otherwise defined, technical or scientific terms used herein shall have the ordinary meaning as understood by those of ordinary skill in the art to which the present disclosure belongs. Terms "first," "second," "third," and the like, as used in the description and in the claims of the patent disclosure of the present disclosure, do not indicate any order, quantity, or importance, but are merely defined to distinguish different components. Likewise, singular forms "a," "an," and "the" are intended to include the plural forms as well, unless the context clearly indicates otherwise. Terms "include," "comprise," or derivatives thereof, when used in this description, specify the presence of stated features, integers, steps, operations, elements, and/or components, but do not preclude the presence or addition of one or more other features, integers, steps, operations, elements, components, and/or groups thereof. Terms "connecting," "connected," or other similar words are not limited to physical or mechanical connections, but may include electrical connections, whether direct or indirect. Terms "up," "down," "left,", "right," and the like are merely defined to indicate relative positional relationships. In the case that the absolute position of a described object changes, the relative position relationship may also change accordingly.

For clearer descriptions of the objectives, technical solutions, and advantages of the present disclosure, embodiments of the present disclosure are further described in detail below with reference to the accompanying drawings.

The embodiments of the present disclosure re to described in detail below, and examples of the embodiments are illustrated in the accompanying drawings. The reference numbers which are the same or similar throughout the accompanying drawings represent the same or similar elements or elements with the same or similar functions. The embodiments described below with reference to the accompanying drawings are intended to be illustrative only, and are not to be construed as limitations to the present disclosure.

The hybrid power transmission system is an important component in a hybrid power vehicle, and adopts an engine and a motor as power sources, such that the vehicle is driven by oil and electricity, and thus has both power and economy. In the related art, the hybrid power transmission system includes an engine, a first motor and a second motor. The engine is drivingly connected to the first motor via a pair of gears, such that the engine can drive the first motor to generate electricity. However, the structure of the hybrid power transmission system in the related art is relatively complex and occupies a larger size, which causes difficulties in arrangement of the hybrid power transmission system in the vehicle.

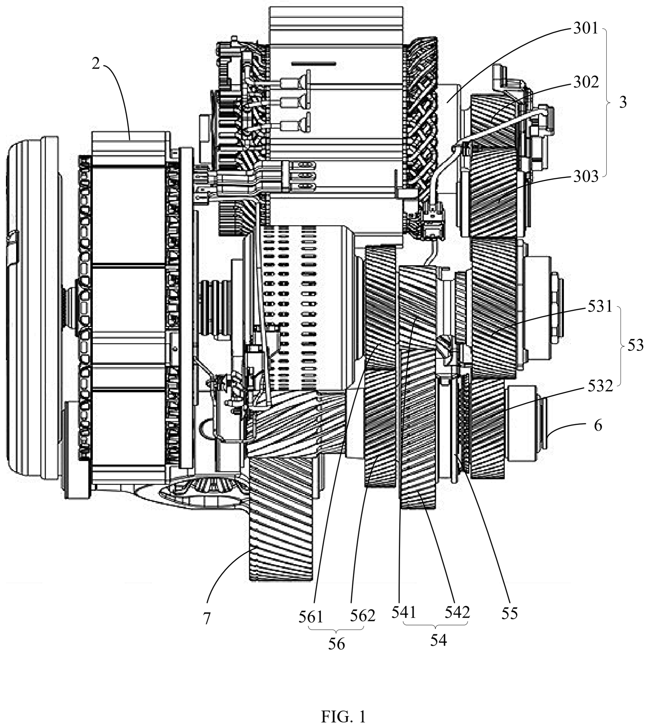

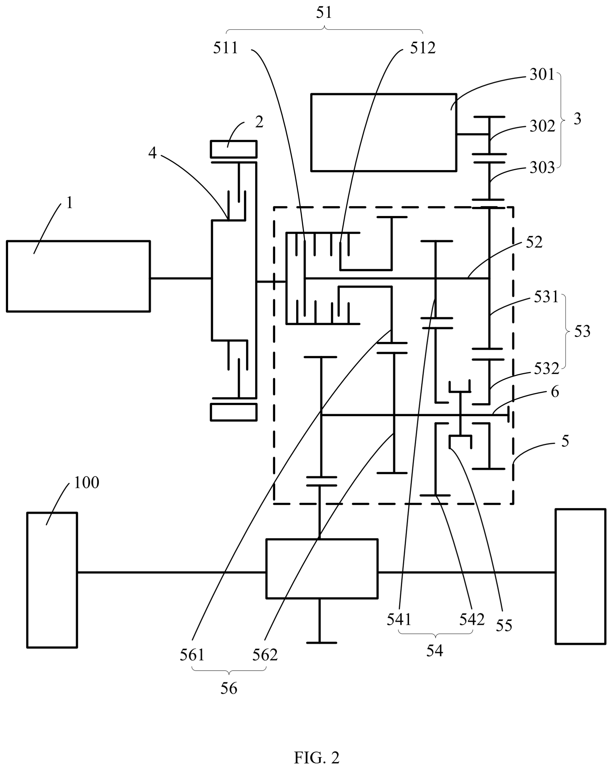

Embodiments of the present disclosure provide a hybrid power transmission system. As shown in FIGS. 1 and 2, the hybrid power transmission system includes an engine 1, a first motor 2, a second motor 3, a first clutch 4, a transmission mechanism 5 and an output shaft 6. The output shaft of the engine 1 is coaxially disposed with an output shaft of the first motor 2, and is drivingly connected to the output shaft of the first motor 2 via the first clutch 4. The output shaft of the first motor 2 and an output shaft of the second motor 3 are connected to the output shaft 6 via the transmission mechanism 5. The transmission mechanism 5 is configured to enable the output shaft 6 to be drivingly connected to the engine 1 and/or the first motor 2 and/or the second motor 3. The output shaft 6 is configured to be drivingly connected to wheels 100.

The engine 1, the first motor 2 and the second motor 3 are power sources of the hybrid power transmission system, and the transmission mechanism 5 is configured to switch the power sources of the output shaft 6.

In the technical solution according to the embodiments of the present disclosure, the engine 1 is coaxially disposed with the first motor 2 are coaxially disposed, and is drivingly connected to the output shaft of the first motor 2 via the first clutch 4. In the case that the engine 1 drives the first motor 2 to generate electricity or the engine 1 drives the output shaft 6 to rotate, the first clutch 4 is engaged. In this way, the engine 1 is drivingly connected to the first motor 2 without a need for a pair of gears therebetween, and a gear shaft is canceled. Therefore, the size of the hybrid power transmission system in the height direction is reduced, such that the size occupied by the hybrid power transmission system is smaller, which is convenient for assembling the hybrid power transmission system in the vehicle.

In some examples, the first motor 2 is sleeved over the first clutch 4.

The implementations of the transmission mechanism 5 are to be illustratively explained as follows.

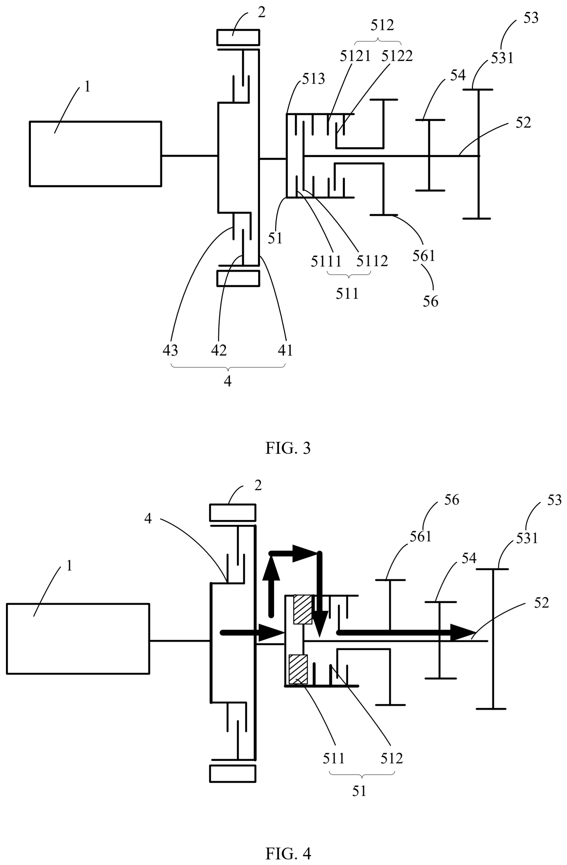

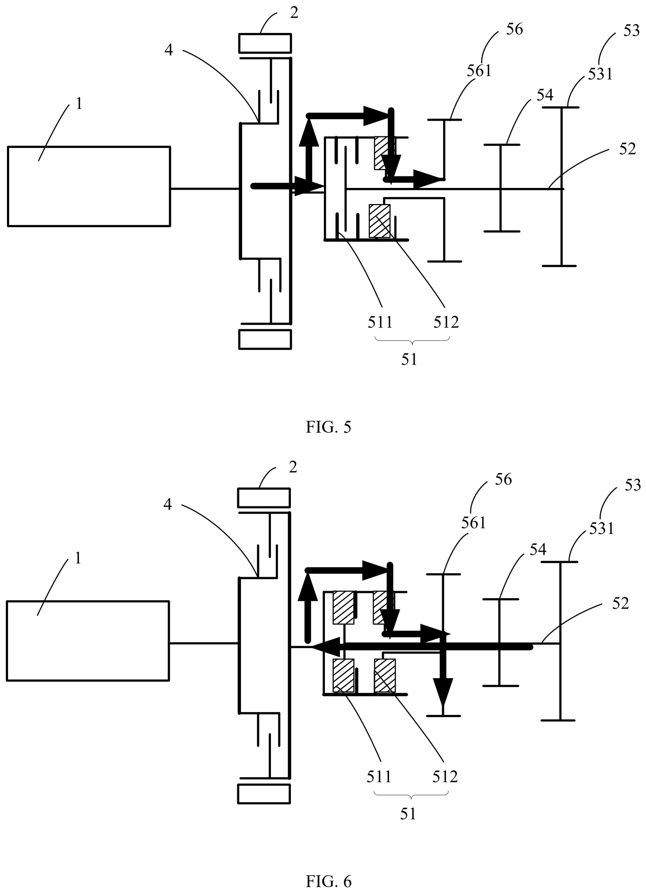

In some examples, as shown in FIG. 2, the transmission mechanism 5 includes a second clutch 51, a transmission shaft 52, a first gear train 53, a second gear train 54, a gear shifting mechanism 55 and a third gear train 56. As shown in FIG. 3, the second clutch 51 is a double-clutch, including a first sub-clutch mechanism 511 and a second sub-clutch mechanism 512. As shown in FIG. 4, the output shaft of the first motor 2 is drivingly connected to the transmission shaft 52 via the first sub-clutch mechanism 511, and the transmission shaft 52 is drivingly connected to input ends of the first gear train 53 and the second gear train 54. As shown in FIG. 2, the second motor 3 is drivingly connected to the input ends of the first gear train 53 and the second gear train 54. Output ends of the first gear train 53 and the second gear train 54 are connected to the output shaft 6 via the gear shifting mechanism 55, and the gear shifting mechanism 55 can shift either the first gear train 53 or the second gear train 54 is drivingly connected to the output shaft 6. As shown in FIG. 5, the input end of the third gear train 56 is drivingly connected to the first motor 2 via the second sub-clutch mechanism 512. As shown in FIG. 6, the input end of the third gear train 56 is connected to the transmission shaft 52 via the first sub-clutch mechanism 511 and the second sub-clutch mechanism 512.

In some exemplary embodiments, as shown in FIG. 2, the first gear train 53 includes a first gear 531 and a second gear 532 engaged which the first gear 531, and the second gear train 54 includes a third gear 541 and a fourth gear 542 engaged with the third gear 541. The first gear 531 and the fourth gear 542 are connected to the transmission shaft 52, the first gear 531 is further drivingly connected to the second motor 3, and the second gear 532 and the fourth gear 542 are sleeved over the output shaft 6. The third gear train 56 includes a fifth gear 561 and a sixth gear 562. The fifth gear 561 is sleeved over the transmission shaft 52 and is connected to the second sub-clutch mechanism 512, and the sixth gear 562 is connected to the output shaft 6. The fifth gear 561 is connected to the second sub-clutch mechanism 512 via a hollow shaft. The hollow shaft is sleeved over the transmission shaft 52, one end of the hollow shaft is connected to the fifth gear 561, and the other end of the hollow shaft is connected to the second sub-clutch mechanism 512.

The gear shifting mechanism 55 is disposed between the second gear 532 and the fourth gear 542, and the gear shifting mechanism 55 is slidably connected to the output shaft 6. In the case that the gear shifting mechanism 55 slides to and is connected to the second gear 532, the first gear 531 drives the second gear 532 to rotate, and the second gear 532 drives the output shaft 6 to rotate via the gear shifting mechanism 55. In the case that the gear shifting mechanism 55 slides to and is connected to the fourth gear 542, the third gear 541 drives the fourth gear 542 to rotate, and the fourth gear 542 drives the output shaft 6 to rotate via the gear shifting mechanism 55. Protrusions are disposed on the side wall of the gear shifting mechanism 55, grooves are disposed on side walls of the second gear 532 and the fourth gear 542, and the protrusions on the gear shifting mechanism 55 extends into the grooves on the second gear 532 and the fourth gear 542, such that the gear shifting mechanism 55 is engaged with the second gear 532 or the fourth gear 542.

In some examples, a transmission ratio of the first gear train 53 is greater than a transmission ratio of the third gear train 56, and the transmission ratio of the third gear train 56 is greater than a transmission ratio of the second gear train 54. In this way, the transmission mechanism 5 achieves the switching of different gear positions. In the case that the transmission mechanism 5 drives the output shaft 6 via the first gear train 53, the transmission mechanism 5 is in a first gear position. In the case that the transmission mechanism 5 drives the output shaft 6 via the second gear train 54, the transmission mechanism 5 is in a second gear position. In the case that the transmission mechanism 5 drives the output shaft 6 via the third gear train 56, the transmission mechanism 5 is in a third gear position.

In some examples, as shown in FIGS. 1 and 2, the second motor 3 includes a motor body 301, an output gear 302 and an idler gear 303. The output gear 302 is connected to the motor body 301, and the idler gear 303 is engaged with the output gear 302 and the input end of the first gear train 53. The idler gear 303 is configured to transmit the power of the output gear 302 to the first gear 531 of the first gear train 53, and the idler gear 303 does not change the transmission ratio between the output gear 302 and the first gear 531. In the case that the idler gear 303 is disposed, a rotation direction of the first gear 531 is the same as a rotation direction of the output gear 302.

The implementations of the clutch are to be illustratively explained as follows.

In some examples, as shown in FIG. 3, the second clutch 51 further includes a first housing 513, and the first housing 513 is connected to the output shaft of the first motor 2. The first sub-clutch mechanism 511 includes a first clutch plate 5111 and a first pressure plate 5112. The first clutch plate 5111 is circumferentially fixed on the inner side of the first housing 513, and the first pressure plate 5112 is connected to the transmission shaft 52. In the case that the first pressure plate 5112 is engaged with the first clutch plate 5111, the first motor 2 is connected to the transmission shaft 52.

The second sub-clutch mechanism 512 includes a second clutch plate 5121 and a second pressure plate 5122, and the second clutch plate 5121 is circumferentially fixed on the inner side of the first housing 513. The second pressure plate 5122 is connected to the third gear train 56 and is sleeved over the transmission shaft 52. In the case that the second clutch plate 5121 is engaged with the second pressure plate 5122, the first motor 2 is drivingly connected to the third gear train 56.

In the case that the first pressure plate 5112 is engaged with the first clutch plate 5111 and the second clutch plate 5121 is engaged with the second pressure plate 5122, the second motor 3 drives the first pressure plate 5112 via the first gear 531 and the transmission shaft 52. The first pressure plate 5112 drives the first housing 513 to rotate via the first clutch plate 5111, and the first housing 513 drives the fifth gear 561 to rotate via the second clutch plate 5121 and the second pressure plate 5122, such that the second motor 3 is drivingly connected to the second gear train 54.

The first sub-clutch mechanism 511 and the second sub-clutch mechanism 512 are combined into a double-clutch. In this way, the first sub-clutch mechanism 511 and the second sub-clutch mechanism 512 have more compact structure and smaller sizes, which is beneficial for reducing an axial size of the hybrid power transmission system, and further reduces the size of the hybrid power transmission system.

In some examples, as shown in FIG. 3, the first clutch 4 includes a second housing 41, a third clutch plate 42 and a third pressure plate 43. The third pressure plate 43 is drivingly connected to the output shaft of the engine 1, and the third clutch plate 42 is circumferentially fixed in the second housing 41. The first motor 2 is sleeved over the second housing 41 and is drivingly connected to the second housing 41. In the case that the first clutch 4 is engaged, the third clutch plate 42 is engaged with the third pressure plate 43, such that the engine 1 drives the third clutch plate 42 to rotate via the third pressure plate 43, and then drives the first motor 2 to rotate via the third clutch plate 42 and the second housing 41.

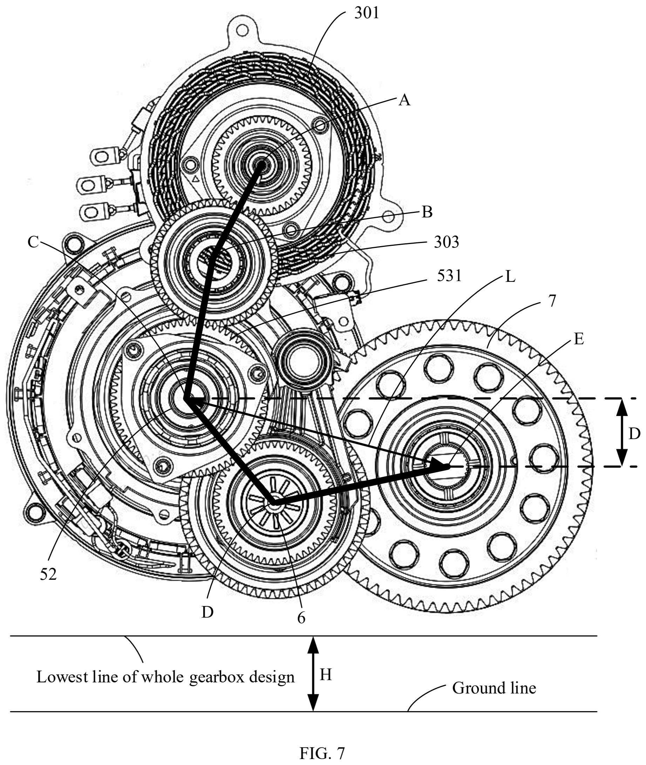

In some examples, as shown in FIGS. 1 and 7, the hybrid power transmission system further includes a differential 7, an input shaft of the differential 7 is drivingly connected to the output shaft 6, and an output shaft of the differential 7 is drivingly connected to the wheels 100.

As shown in FIG. 7, assuming that an axis of the motor body 301 of the second motor 3 is A, an axis of the idler gear 303 is B, an axis of the transmission shaft 52 is C, an axis of the output shaft 6 is D, and an axis of the output shaft of the differential 7 is E, ∠ABC, ∠ZBCD and ∠LCDE are all less than 180°, such that the whole hybrid power transmission system has a more compact structure.

In some exemplary embodiments, ∠ABC is 164.82°±0.5°, ∠BCD is 130°±0.5° and ∠ CDE is 117.25°±0.5°. The center distance L between the transmission shaft 52 and the output shaft of the differential 7 is 197 mm, and the height difference D between the transmission shaft 52 and the output shaft of the differential 7 is 65 mm.

The hybrid power transmission system is disposed in a gearbox. Assuming that the height difference between the lowest line of the whole gearbox design of the gearbox and the ground line is H, H is 226 mm to 236 mm.

The working principle of the hybrid power transmission system are to be illustratively explained as follows.

In some examples, the hybrid power transmission system has a pure electric driving mode and an engine driving mode. The implementations of the pure electric driving mode and the engine driving mode are to be illustratively explained as follows. The black bold arrows in the figures are power transmission paths.

### Pure electric driving mode

In the pure electric driving mode, the first clutch 4 is not engaged, and the second motor 3 drives the output shaft 6 to rotate. Alternatively, the first motor 2 and the second motor 3 jointly drive the output shaft 6 to rotate. The pure electric driving mode has a single-motor mode and a double-motor mode.

### Single-motor mode

In the single-motor mode, the engine 1 and the first motor 2 do not rotate, and the second motor 3 drives the output shaft 6 to rotate. The single-motor mode has a first gear position, a second gear position and a third gear position, and is suitable for the situation that the vehicle has sufficient electricity or the vehicle is driven at middle speed and at low speed on an urban road.

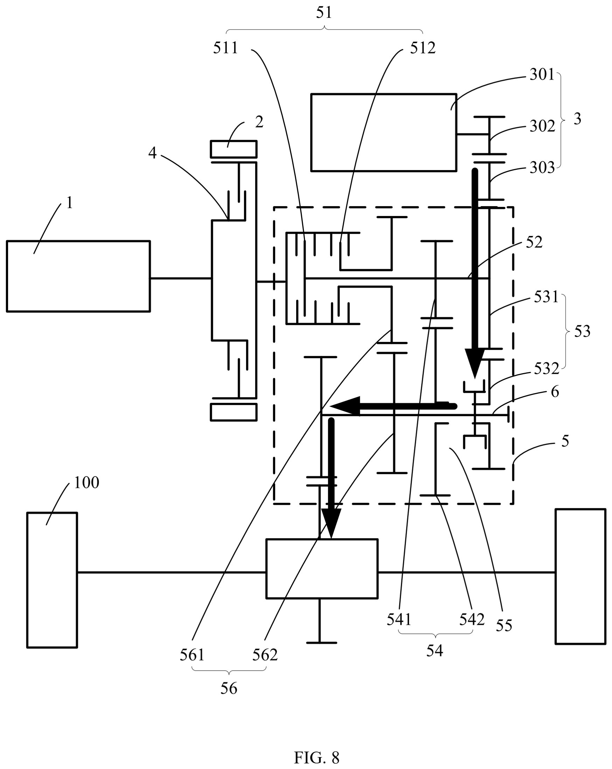

In the first gear position of the single-motor mode, as shown in FIG. 8, the first clutch 4, the first sub-clutch mechanism 511 and the second sub-clutch mechanism 512 are not engaged. The gear shifting mechanism 55 is engaged with the second gear 532 of the first gear train 53, and the power of the second motor 3 is transmitted to the output shaft 6 via the first gear train 53 and the gear shifting mechanism 55 sequentially.

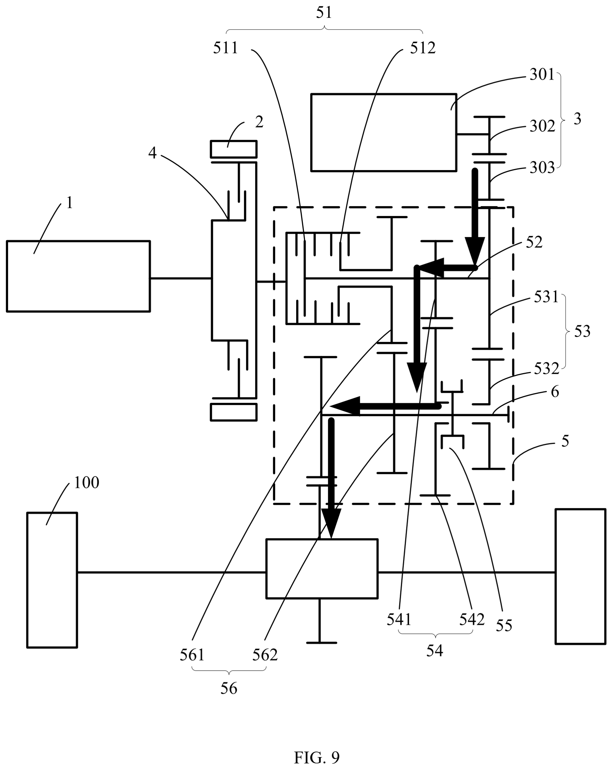

In the second gear position of the single-motor mode, as shown in FIG. 9, the first clutch 4, the first sub-clutch mechanism 511 and the second sub-clutch mechanism 512 are not engaged. The gear shifting mechanism 55 is engaged with the fourth gear 542 of the second gear train 54, and the power of the second motor 3 is transmitted to the output shaft 6 via the second gear train 54 and the gear shifting mechanism 55 sequentially.

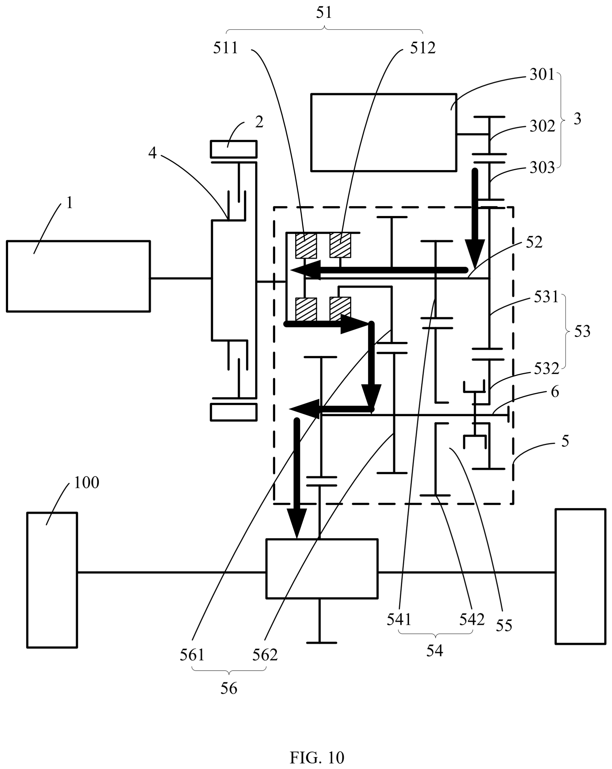

In the third gear position of the single-motor mode, as shown in FIG. 10, the first clutch 4 is not engaged, and the first sub-clutch mechanism 511 and the second sub-clutch mechanism 512 are engaged. The power of the second motor 3 is transmitted to the output shaft 6 via the first gear 531, the transmission shaft 52, the first sub-clutch mechanism 511, the second sub-clutch mechanism 512 and the third gear train 56 sequentially.

### (b) Double-motor mode

In the double-motor mode, the engine 1 does not rotate, and the first motor 2 and the second motor 3 simultaneously drive the output shaft 6 to rotate. The first motor 2 and the second motor 3 drives the output shaft 6 via the same gear train. For example, the first motor 2 and the second motor 3 drive the first gear train 53. The first motor 2 and the second motor 3 also drives the output shaft 6 via different gear trains. For example, the first motor 2 drives the output shaft 6 via the third gear train 56 and the second motor 3 drives the output shaft via the first gear train 53. In this way, the function of no power interruption during gear shifting is achieved. The single-motor mode is suitable for the situation that the vehicle has sufficient electricity or the vehicle is driven at high speed on the urban road.

In the double-motor mode, the hybrid power transmission system has a first double-motor gear position, a second double-motor gear position, a third double-motor gear position, a fourth double-motor gear position and a fifth double-motor gear position.

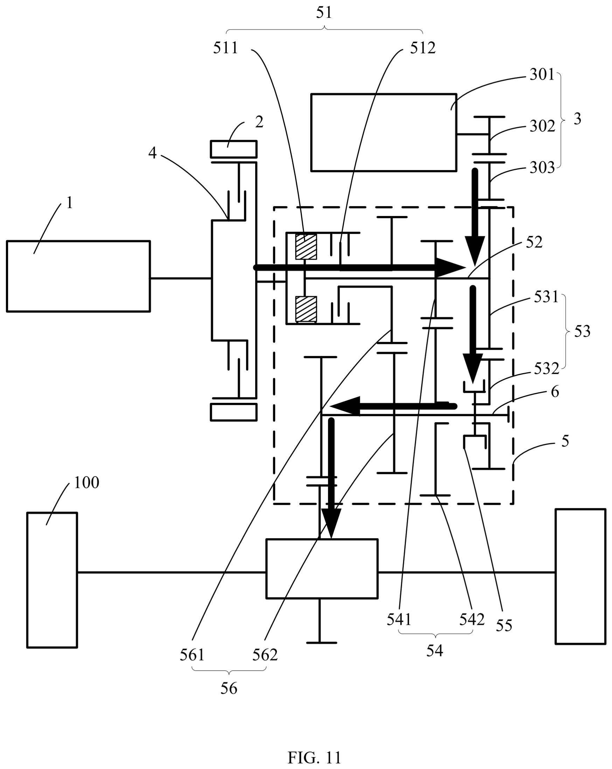

In the first double-motor gear position, as shown in FIG. 11, the gear shifting mechanism 55 is engaged with the second gear 532 of the first gear train 53, and the first sub-clutch mechanism 511 is engaged, such that both the first motor 2 and the second motor 3 drive the first gear train 53.

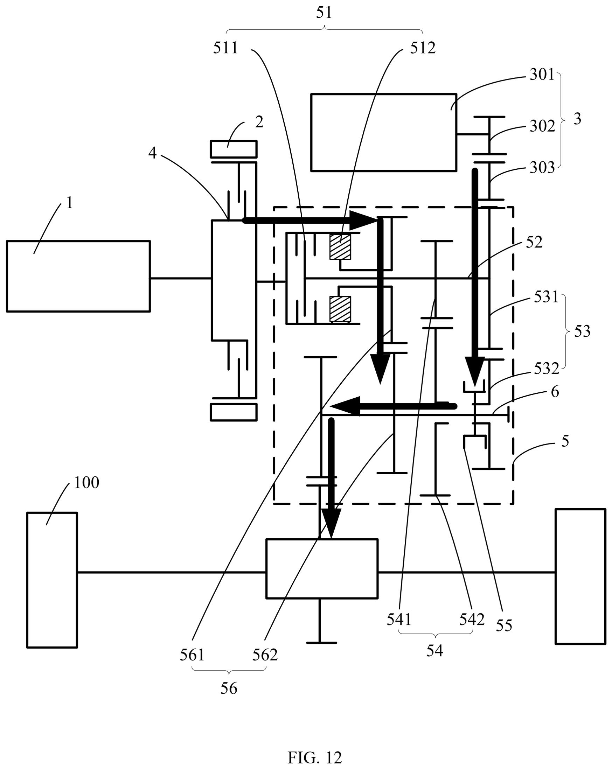

In the second double-motor gear position, as shown in FIG. 12, the gear shifting mechanism 55 is engaged with the second gear 532 of the first gear train 53, such that the second motor 3 drives the first gear train 53, and the second sub-clutch mechanism 512 is engaged simultaneously, such that the first motor 2 drives the third gear train 56.

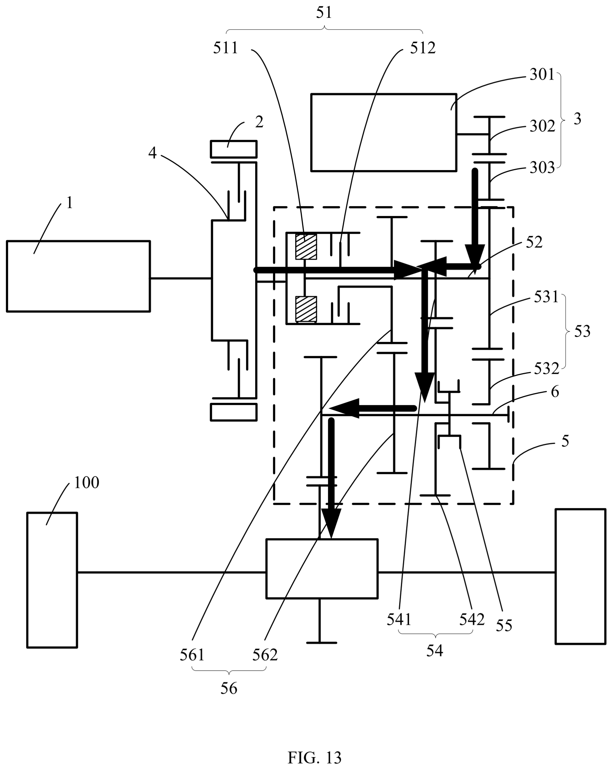

In the third double-motor gear position, as shown in FIG. 13, the gear shifting mechanism 55 is engaged with the fourth gear 542 of the second gear train 54 and the first sub-clutch mechanism 511 is engaged, such that both the first motor 2 and the second motor 3 drive the second gear train 54.

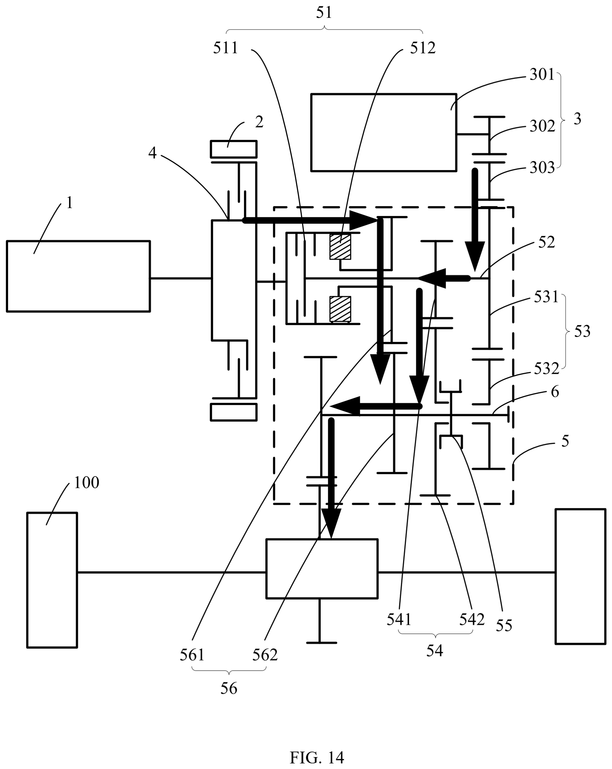

In the fourth double-motor gear position, as shown in FIG. 14, the gear shifting mechanism 55 is engaged with the fourth gear 542 of the second gear train 54, the second motor 3 drives the second gear train 54, the second sub-clutch mechanism 512 is engaged simultaneously, and the first motor 2 drives the third gear train 56.

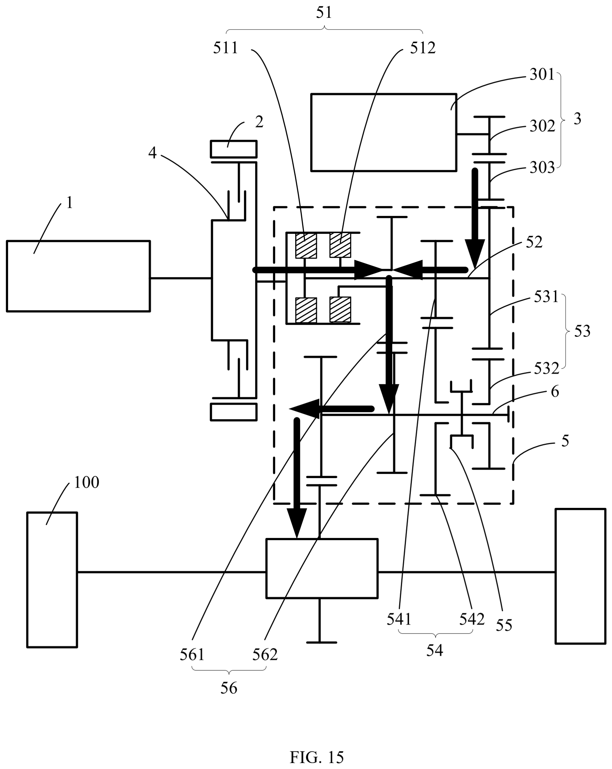

In the fifth double-motor gear position, as shown in FIG. 15, the first sub-clutch mechanism 511 and the second sub-clutch mechanism 512 are engaged, the first motor 2 and the second motor 3 drive the third gear train 56, and the gear shifting mechanism 55 is not engaged with the second gear 532 and the fourth gear 542.

### (2) Engine driving mode

In the engine driving mode, the first clutch 4 is engaged, and the first sub-clutch mechanism 511 and/or the second sub-clutch mechanism 512 are/is engaged. The engine driving mode has a first gear position, a second gear position and a third gear position.

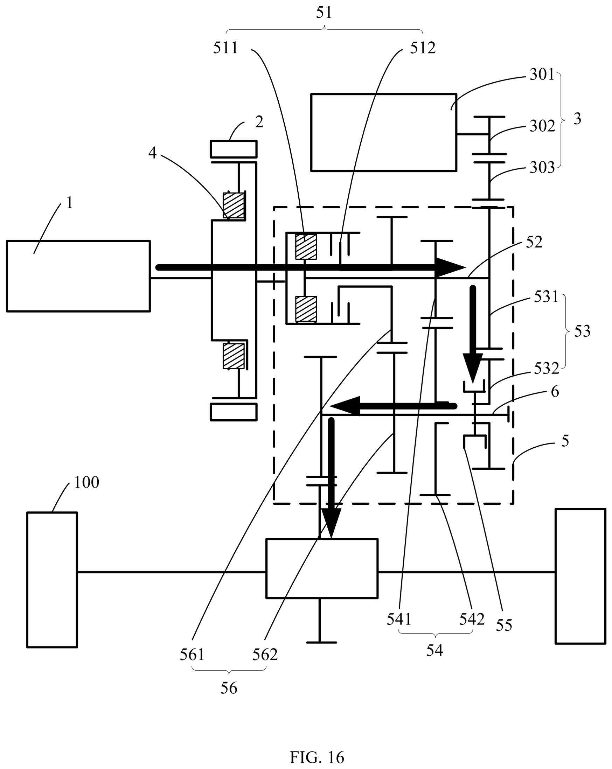

In the first gear position of the engine driving mode, as shown in FIG. 16, the first clutch 4 and the first sub-clutch mechanism 511 are engaged, and the power of the engine 1 is transmitted to the first gear 531 of the first gear train 53 via the first motor 2, the first sub-clutch mechanism 511 and the transmission shaft 52. The gear shifting mechanism 55 is engaged with the second gear 532, such that the first gear train 53 drives the output shaft 6 to rotate.

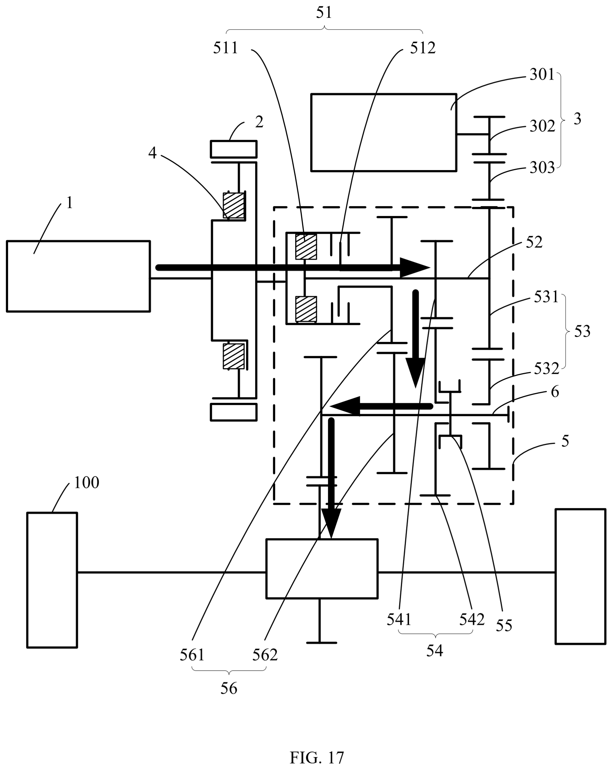

In the second gear position of the engine driving mode, as shown in FIG. 17, the first clutch 4 and the first sub-clutch mechanism 511 are engaged, and the power of the engine 1 is transmitted to the third gear 541 of the second gear train 54 via the first motor 2, the first sub-clutch mechanism 511 and the transmission shaft 52. The gear shifting mechanism 55 is engaged with the fourth gear 542, such that the second gear train 54 drives the output shaft 6 to rotate.

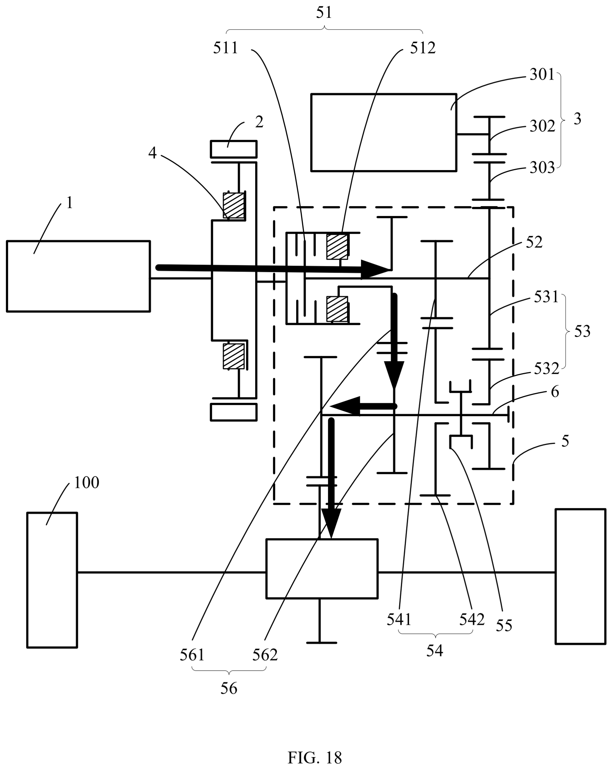

In the third gear position of the engine driving mode, as shown in FIG. 18, the first clutch 4 and the second sub-clutch mechanism 512 are engaged, and the power of the engine 1 is transmitted to the output shaft 6 via the first motor 2, the second sub-clutch mechanism 512 and the third gear train 56, and he gear shifting mechanism 55 is not engaged with the second gear 532 and the fourth gear 542.

It should be noted that in the engine driving mode, although the first motor 2 rotates, the first motor 2only plays a role of transmitting power, that is, the first motor 2 is not energized, and the first motor 2 is regarded as the transmission shaft.

In some examples, the hybrid power transmission system has a series driving mode and a parallel driving mode. The implementations of the series driving mode and the parallel driving mode are to be illustratively explained as follows.

### (1) Series driving mode

In the series driving mode, the first clutch 4 is engaged, and the engine 1 drives the first motor 2 to generate electricity. The first motor 2 is configured to supply electricity to the second motor 3, and the second motor 3 drives the transmission mechanism 5. The series driving mode is also called an extended range mode. The engine 1 does not directly drive the output shaft 6 and is only configured to drive the first motor 2 to generate electricity. Therefore, in the series driving mode, only the switching of the first gear position and the second gear position is achieved. To achieve the second gear position, the first sub-clutch mechanism 511 and the second sub-clutch mechanism 512 need to be engaged simultaneously, which enables the engine 1 to transmit power to the third gear train 56. The switching principle of the first gear position and the second gear position in the series driving mode is similar to the switching principle of the first gear position and the second gear position in the single-motor mode, which is not repeated herein.

### (2) Parallel driving mode

In the parallel driving mode, the first clutch 4 is engaged, the first sub-clutch mechanism 511 and/or the second sub-clutch mechanism 512 are/is engaged, and the engine 1, the first motor 2 and the second motor 3 jointly drive the transmission mechanism 5. The parallel driving mode has a first parallel gear position, a second parallel gear position, a third parallel gear position, a fourth parallel gear position and a fifth parallel gear position.

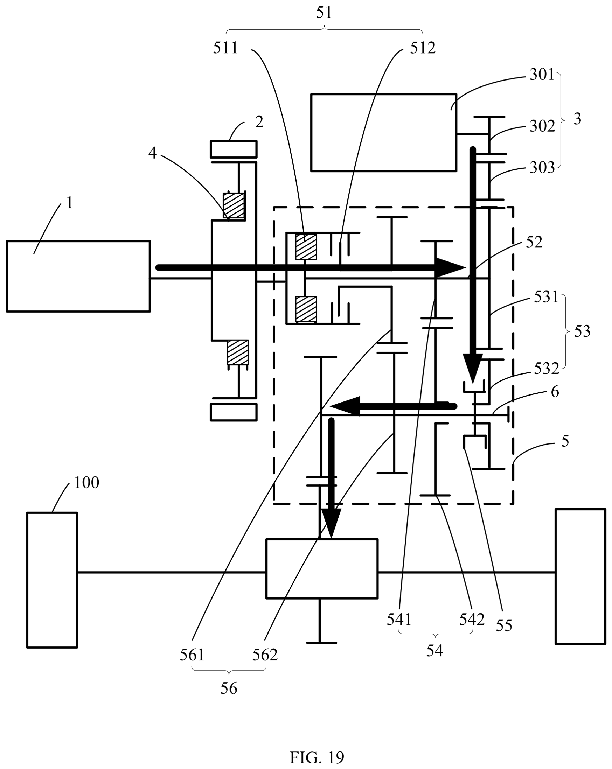

In the first parallel gear position, as shown in FIG. 19, the first clutch 4 and the first sub-clutch mechanism 511 are engaged, and the gear shifting mechanism 55 is engaged with the second gear 532 of the first gear train 53, such that the engine 1, the first motor 2 and the second motor 3 all drive the output shaft 6 via the first gear train 53.

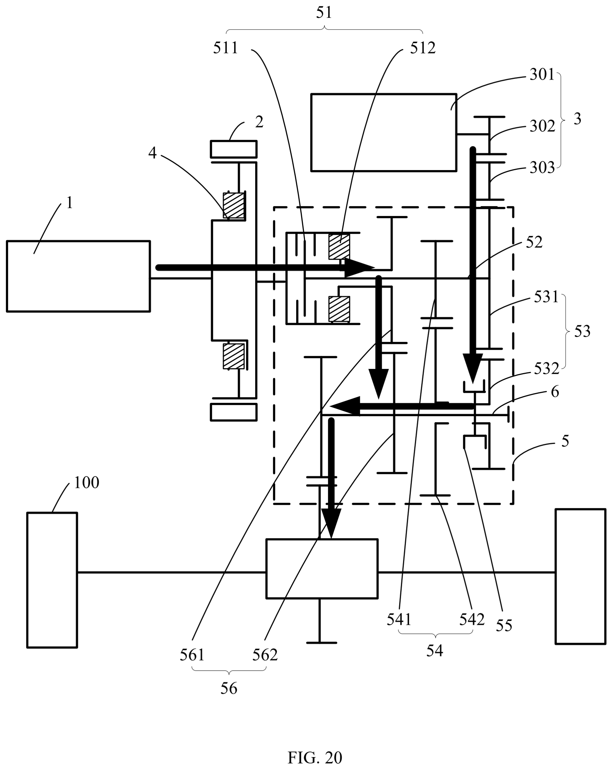

In the second parallel gear position, as shown in FIG. 20, both the first clutch 4 and the second sub-clutch mechanism 512 are engaged, and the gear shifting mechanism 55 is engaged with the second gear 532 of the first gear train 53, such that the engine 1 and the first motor 2 drive the transmission shaft 6 via the third gear train 56, and the second motor 3 drives the output shaft 6 via the first gear train 53.

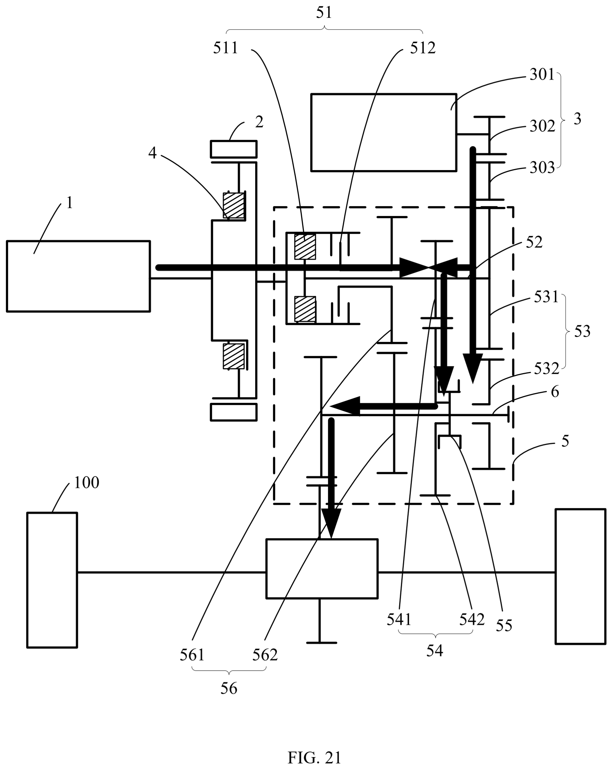

In the third parallel gear position, as shown in FIG. 21, the first clutch 4 and the first sub-clutch mechanism 511 are engaged, and the gear shifting mechanism 55 is engaged with the fourth gear 542 of the second gear train 54, such that the engine 1, the first motor 2 and the second motor 3 all drive the output shaft 6 via the second gear train 54.

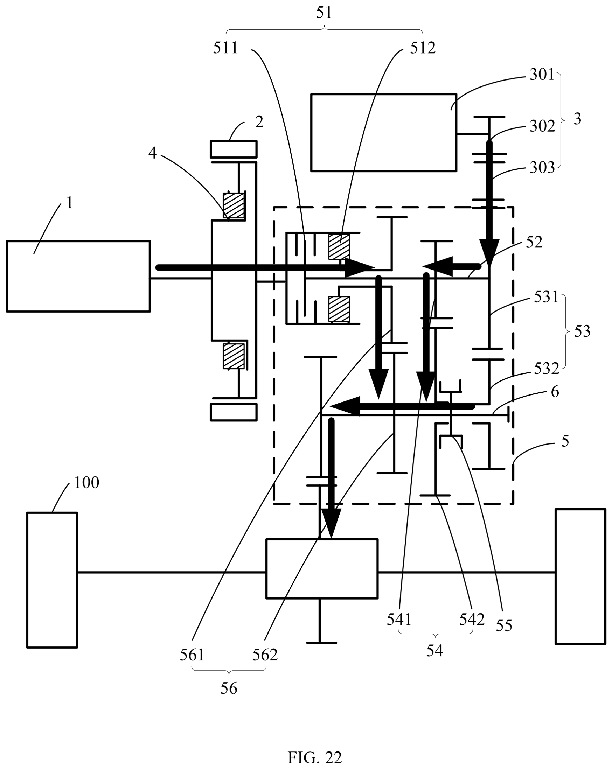

In the fourth parallel gear position, as shown in FIG. 22, the first clutch 4 and the second sub-clutch mechanism 512 are engaged, and the gear shifting mechanism 55 is engaged with the fourth gear 542 of the second gear train 54, such that the engine 1 and the first motor 2 drive the transmission shaft 6 via the third gear train 56, and the second motor 3 drives the output shaft 6 via the second gear train 54.

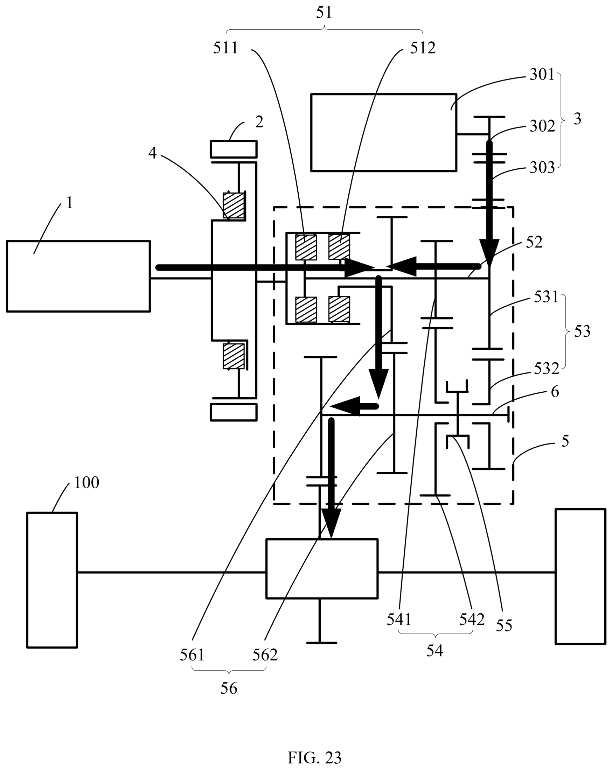

In the fifth parallel gear position, as shown in FIG. 23, the first clutch 4, the first sub-clutch mechanism 511 and the second sub-clutch mechanism 512 are all engaged, such that the engine 1, the first motor 2 and the second motor 3 all drive the output shaft 6 via the third gear train 56, and the gear shifting mechanism 55 is not engaged with the second gear 532 and the fourth gear 542.

In some examples, the hybrid power transmission system also has a driving charging mode. In the driving charging mode, the first clutch 4 is engaged, and the engine 1 drives the first motor 2 to generate electricity. In the driving charging mode, the hybrid power transmission system also has an engine driving mode, and the principle of the engine driving mode in the driving charging mode is similar to the principle of the foregoing engine driving mode, which is not repeated herein.

In the driving charging mode, the second motor 3 also participates in driving the output shaft 6. In this way, the principle of gear position shifting of the hybrid power transmission system is similar to that of gear position shifting in the parallel driving mode, but the difference is that in the driving charging mode, the first motor 2 does not participate in driving and only generates electricity, which is not repeated herein.

In some examples, the hybrid power transmission system also has a parking charging mode. In the parking charging mode, the first clutch 4 is engaged, and the engine 1 drives the first motor 2 to generate electricity.

In the hybrid power transmission system according to the embodiments of the present disclosure, five gear shafts, ten gears and three clutches are integrated to achieve the independent driving and hybrid driving functions of the engine and driving motors, and the power generation function of a power generator is also achieved. Combined with the parameters such as power, torque and rotational speed of the engine, the parameters such as power, torque and rotational speed of the motor as well as boundary limit requirements of the whole vehicle and boundary requirements of the hybrid power gearbox per se, the space is fully utilized to achieve the design of three gear positions, which can meet layout requirements of the whole vehicle in a limited space and achieve superior power performance at the same time. The multi-gear position design makes full use of the high-efficiency operating point of the engine to achieve low fuel consumption performance.

An embodiment of the present disclosure also provides a vehicle, and the vehicle includes the hybrid power transmission system above.

Described above are merely optional embodiments of the present disclosure, and are not intended to limit the present disclosure. Any modifications, equivalent replacements, improvements and the like made within the spirit and principles of the present disclosure should be included within the scope of protection of the present disclosure.

## Claims

1. A hybrid power transmission system, comprising an engine (1), a first motor (2), a second motor (3), a first clutch (4), a transmission mechanism (5) and an output shaft (6);
an output shaft of the engine (1) is coaxially disposed with an output shaft of the first motor (2), and is drivingly connected to the output shaft of the first motor (2) via the first clutch (4);
the output shaft of the first motor (2) and an output shaft of the second motor (3) are connected to the output shaft (6) via the transmission mechanism (5), wherein the transmission mechanism (5) is configured to enable the output shaft (6) to be drivingly connected to the engine (1) and/or the first motor (2) and/or the second motor (3); and
the output shaft (6) is configured to be drivingly connected to wheels (100).

2. The hybrid power transmission system according to claim 1, wherein the first motor (2) is sleeved over the first clutch (4).

3. The hybrid power transmission system according to claim 1, wherein the transmission mechanism (5) comprises a second clutch (51), a transmission shaft (52), a first gear train (53), a second gear train (54), a gear shifting mechanism (55) and a third gear train (56), and the second clutch (51) is a double-clutch and comprises a first sub-clutch mechanism (511) and a second sub-clutch mechanism (512);
the output shaft of the first motor (2) is drivingly connected to the transmission shaft (52) via the first sub-clutch mechanism (511), and the transmission shaft (52) is drivingly connected to input ends of the first gear train (53) and the second gear train (54);
the second motor (3) is drivingly connected to the input ends of the first gear train (53) and the second gear train (54);
output ends of the first gear train (53) and the second gear train (54) are connected to the output shaft (6) via the gear shifting mechanism (55), and the gear shifting mechanism (55) is capable of shifting either the first gear train (53) or the first gear train (53) to be drivingly connected to the output shaft (6); and
an input end of the third gear train (56) is drivingly connected to the first motor (2) via the second sub-clutch mechanism (512), and the input end of the third gear train (56) is connected to the transmission shaft (52) via the first sub-clutch mechanism (511) and the second sub-clutch mechanism (512).

4. The hybrid power transmission system according to claim 3, wherein a transmission ratio of the first gear train (53) is greater than a transmission ratio of the third gear train (56), and the transmission ratio of the third gear train (56) is greater than a transmission ratio of the second gear train (54).

5. The hybrid power transmission system according to claim 3, wherein the hybrid power transmission system has a pure electric driving mode and an engine driving mode;
wherein in the pure electric driving mode, the first clutch (4) is not engaged, the second motor (3) drives the output shaft (6) to rotate, or the first motor (2) and the second motor (3) jointly drive the output shaft (6) to rotate; and
in the engine driving mode, the first clutch (4) is engaged, and the first sub-clutch mechanism (511) and/or the second sub-clutch mechanism (512) are/is engaged.

6. The hybrid power transmission system according to claim 3, wherein the hybrid power transmission system has a series driving mode and a parallel driving mode;
wherein in the series driving mode, the first clutch (4) is engaged, the engine (1) drives the first motor (2) to generate electricity, the first motor (2) is configured to supply electricity to the second motor (3), and the second motor (3) drives the output shaft (6); and
in the parallel driving mode, the first clutch (4) is engaged, the first sub-clutch mechanism (511) and/or the second sub-clutch mechanism (512) are/is engaged, and the engine (1), the first motor (2) and the second motor (3) jointly drive the output shaft (6).

7. The hybrid power transmission system according to any one of claims 3 to 6, wherein the first gear train (53) comprises a first gear (531) and a second gear (532) engaged with the first gear (531), and the second gear train (54) comprises a third gear (541) and a fourth gear (542) engaged with the third gear (541);
wherein the first gear (531) and the third gear (541) are connected to the transmission shaft (52), the first gear (531) is further drivingly connected to the second motor (3), and the second gear (532) and the fourth gear (542) are sleeved over the output shaft (6); and
the third gear train (56) comprises a fifth gear (561) and a sixth gear (562), the fifth gear (561) is sleeved over the transmission shaft (52) and is connected to the second sub-clutch mechanism (512), and the sixth gear (562) is connected to the output shaft (6).

8. The hybrid power transmission system according to any one of claims 3 to 6, wherein the second clutch (51) further comprises a first housing (513), wherein the first housing (513) is connected to the output shaft of the first motor (2);
the first sub-clutch mechanism (511) comprises a first clutch plate (5111) and a first pressure plate (5112), the first clutch plate (5111) is circumferentially fixed on an inner side of the first housing (513), the first pressure plate (5112) is connected to the transmission shaft (52), and in response to the first pressure plate (5112) being engaged with the first clutch plate (5111), the first motor (2) is connected to the transmission shaft (52); and
the second sub-clutch mechanism (512) comprises a second clutch plate (5121) and a second pressure plate (5122), the second clutch plate (5121) is circumferentially fixed on the inner side of the first housing (513), the second pressure plate (5122) is connected to the third gear train (56) and is sleeved on the transmission shaft (52), and in response to the second clutch plate (5121) being engaged with the second pressure plate (5122), the first motor (2) is drivingly connected to the third gear train (56).

9. The hybrid power transmission system according to any one of claims 1 to 6, wherein the second motor (3) comprises a motor body (301), an output gear (302) and an idler gear (303);
wherein the output gear (302) is connected to the motor body (301), and the idler gear (303) is engaged with the output gear (302) and an input end of the first gear train (53).

10. A vehicle, comprising the hybrid power transmission system as defined in any one of claims 1 to 9.
